# FASCICULE DE BREVET EUROPEEN

(11) **EP 2 749 492 B1**
(45) Date de publication et mention de la délivrance du brevet: **12.08.2015**
(21) Numéro de dépôt: 13197233.3
(22) Date de dépôt: 13.12.2013
(51) Int. Cl.: B64C 1/14, B64C 1/32

(54) **Cockpit d'aéronef à issue de secours par une glace centrale**
Cockpit eines Luftfahrzeugs mit Notausgang durch eine zentrale Glasscheibe
Aircraft cockpit with emergency exit via a central windshield

(30) Priorité: 13.12.2012 FR 1262000
(43) Date de publication de la demande: 02.07.2014
(73) Titulaire: Airbus Operations, 31060 Toulouse (FR)
(72) Inventeur: Durand, Yves, 31840 AUSSONNE (FR); Guering, Bernard, 31850 MONTRABE (FR)
(74) Mandataire: Santarelli

(56) Documents cités:
- EP-A1- 2 394 910
- DE-A1- 3 741 859
- US-A- 3 050 790
- US-A1- 2002 017 414

## Description

La présente invention concerne de manière générale un aménagement d'issue de secours dans un cockpit d'aéronef.

La sécurité des cockpits est problématique sur les avions commerciaux modernes car cette contrainte durcit avec le temps et devient de plus en plus pénalisante pour l'aménagement de l'avion, y compris en cas de moyens courriers, voire de longs courriers.

Dans un avion, il est nécessaire de prévoir des moyens d'évacuation des occupants de l'avion, dans les cas d'urgence, notamment les cas de crash où l'urgence et la détérioration de l'avion interdisent l'utilisation de moyens nominaux. Chaque zone doit être traitée séparément. La cabine et le cockpit sont deux zones distinctes.

Le cockpit doit donc disposer de ses propres moyens d'évacuation.

Le besoin en ce terme décrit par la règlementation dit que :
- une seule issue est suffisante si celle-ci est située dans l'axe de l'avion,
- deux issues sont nécessaires si celles-ci sont de part et d'autre de l'avion,
- il n'est pas possible de disposer d'une issue de secours de type axiale ventrale, ceci vis-à-vis des atterrissages avec train effacé bloquant rendant cette issue inopérante.

Aujourd'hui, les solutions couramment utilisées dans un cockpit sont soit d'utiliser des glaces ouvrantes disposées à gauche et à droite des pilotes, soit d'utiliser une trappe d'évacuation implantée en partie supérieure du cockpit, généralement en retrait des pilotes.

En supplément du besoin sécuritaire, existe un besoin de confort. En effet, bien que cela ne soit généralement pas une obligation, il est souhaitable de proposer dans un cockpit, au sol, une ventilation naturelle malgré l'existence d'une climatisation propre au cockpit. Cet état de l'art est par exemple illustré par les documents US-A-3 050 790 et EP-A-2 394 910.

La solution mentionnée précédemment consistant en deux glaces latérales ouvrantes répond généralement à ce problème de manière satisfaisante, dans la mesure où l'ouverture et la fermeture de celles-ci sont réalisées simplement, et de manière réversible. Il est aussi possible de prévoir des ouvertures latérales de type glace de pare-brise à usage unique pour évacuation. La réalisation dans ce cas est plus simple, mais l'on ne dispose pas de la fonction de confort précédemment décrite.

Par ailleurs, la réalisation de glaces latérales ouvrantes a notamment pour inconvénient le fait qu'il faut disposer de place en arrière de celles-ci, pour les translater afin de dégager suffisamment l'ouverture, ou encore, du fait de la duplication des besoins pour chaque pilote - le fait d'avoir deux ouvertures nécessaires induit une multiplication des mécanismes d'ouverture y relatifs par exemple - une telle réalisation est plus couteuse en masse et en temps, vis-à-vis par exemple d'une simple ouverture supérieure constituée par une trappe, par exemple métallique.

Or, si une telle trappe permet de disposer d'une voie unique de secours comme le prescrit la réglementation, il peut être souhaité d'avoir une issue centrale plus commode d'accès, et en tout cas, une telle trappe ne permet pas d'apporter le confort lié à une ventilation naturelle.

La présente invention vise à remédier au moins en partie aux inconvénients précités, en proposant une solution, notamment pour un avion moyen voire long courrier, présentant au moins l'unicité en terme d'issue de secours, positionnée de sorte à pouvoir être ouverte facilement, et ceci en pénalisant le moins possible le volume global du cockpit.

L'invention propose, à cet effet, un cockpit d'aéronef à double poste de pilotage comprenant un pare-brise comprenant, dans un chambranle délimitant une ouverture centrale, une glace centrale, ayant une position fermée dans laquelle la glace centrale obture l'ouverture, et à partir de laquelle elle est amovible pour dégager au moins partiellement l'ouverture délimitée par le chambranle, cette ouverture ayant des dimensions suffisantes pour constituer une issue de secours.

La glace centrale du pare-brise est escamotable, vers le bas, entre la position fermée et une position ouverte, dans laquelle la glace centrale est dans un lieu de stockage. De la sorte, la glace centrale conserve une position connue, en cas de nécessité, voire d'urgence. On entend ici par escamotable, que la glace centrale du pare-brise est occultée au moins partiellement par des éléments présents dans le cockpit, comme par exemple un auvent ou un tableau de bord. L'invention propose la mise en oeuvre d'une glace de pare-brise ouvrante disposée en partie axiale du cockpit, permettant de faire office d'issue de secours pour une évacuation d'urgence.

Contrairement à ce que l'on pouvait penser, une telle mise en oeuvre est compatible avec le souci de ne pas gêner le champ de vue des pilotes, avec des contraintes de résistance aux conditions de vol, et avec le souci de pouvoir trouver un espace pour dégager la glace centrale.

On entend ici par « chambranle » un cadre définissant un logement de la glace centrale, qui permet son maintien en position lorsqu'elle est en position fermée.

Par exemple, en termes de dimensions, une ouverture de 550 mm (millimètres) de large et de 600 mm de haut est de prime abord un ordre de grandeur répondant au besoin pour une évacuation facile.

Un escamotage de la glace centrale à l'intérieur du cockpit permet en outre une réversibilité du mouvement. Ainsi, la glace centrale en position ouverte permet non seulement de faire office d'issue de secours, mais aussi de pouvoir assurer une ventilation du cockpit avant de refermer la glace centrale.

Un tel mouvement vers le bas, c'est-à-dire vertical, est particulièrement pratique pour une glace centrale de pare-brise du fait qu'un pare-brise, dans sa partie centrale, présente généralement une courbure horizontale importante.

De plus, différents éléments présents dans un cockpit présentent désormais un encombrement de plus en plus réduit, grâce par exemple à l'utilisation d'écrans plats, optionnellement tactiles, ou de meubles avioniques plus compacts, ce qui permet de dégager du volume dans le cockpit, notamment vers l'avant du cockpit, permettant de pouvoir envisager un tel déplacement d'une glace centrale de pare-brise en modifiant au minimum un aménagement du cockpit.

Selon un aspect particulièrement avantageux, la présente invention confère en outre le confort en termes de ventilation naturelle lié à la possibilité d'ouvrir cette issue de manière réversible. Pour cela, la glace centrale présente en outre au moins une position intermédiaire entre la position fermée et la position ouverte dans laquelle elle permet une aération du cockpit.

Ainsi, la glace centrale de pare-brise ouvrante disposée en partie axiale du cockpit, permet à la fois de faire office d'issue de secours pour une évacuation d'urgence, et de procurer une ventilation naturelle du cockpit confortable. La glace centrale présente par exemple une ou plusieurs positions intermédiaires permettant de choisir un degré de ventilation du cockpit.

De plus, un mouvement vertical de la glace centrale, lié à un escamotage de celle-ci vers le bas pour passer d'une position fermée à une position ouverte, permet en outre d'éviter qu'elle ne pénètre dans le champ de vision d'un des pilotes et ne le gêne lorsque la glace centrale est dans une position intermédiaire voire ouverte ; ce qui aurait été le cas avec un mouvement latéral, i.e. horizontal, selon lequel la glace centrale dans une position ouverte ou intermédiaire tendrait à se retrouver en face d'un pilote.

Selon un exemple intéressant de réalisation, la glace centrale est montée coulissante sur au moins un rail de guidage dont la géométrie permet d'extraire la glace centrale de son chambranle et d'amener celle-ci à son lieu de stockage, la glace centrale étant guidée et déplacée dans au moins ce rail via des galets.

Selon certaines dispositions particulières, le cockpit comporte en outre un élément élastique conçu pour augmenter un effort nécessaire au mouvement de la glace centrale au fur et à mesure qu'elle est déplacée.

Et par commodité, le cockpit comprend, par exemple, un dispositif de freinage dynamique de la glace centrale, comme par exemple des vérins hydrauliques de freinage dynamique.

On pourrait penser qu'une difficulté réside dans le fait qu'une planche de bord et un auvent de la partie centrale du cockpit obturent une grande partie du passage nécessaire à l'évacuation des membres d'équipage.

Afin de faciliter l'évacuation des membres d'équipage du cockpit, par exemple les pilotes, notamment en cas d'urgence, est proposé un cockpit d'aéronef, par exemple tel que décrit précédemment, comprenant un auvent ayant une partie centrale mobile. Cette partie centrale de l'auvent est par exemple basculante de sorte à former une rampe d'accès à la glace centrale du pare-brise, via le chambranle lorsque la glace centrale est dans une position ouverte.

Selon des dispositions particulières, pour faciliter encore davantage un accès à l'issue de secours formée par la glace centrale du pare-brise, le cockpit comprend une planche de bord ayant une partie centrale mobile. La partie centrale de la planche de bord est par exemple escamotable ou rétractable pour dégager au mieux l'accès à l'issue de secours.

Selon un exemple de réalisation particulièrement intéressant, la partie centrale de l'auvent est reliée d'une part à la partie centrale de la planche de bord par une première liaison pivot, et d'autre part au chambranle par une deuxième liaison pivot, et la partie centrale de la planche de bord est reliée d'une part à la partie centrale de l'auvent par la première liaison pivot, et d'autre part à un pylône par au moins une liaison glissière, voire de préférence un pivot-glissant.

Un tel agencement du cockpit permet ainsi de former un chemin d'accès direct à l'issue de secours formée par la glace centrale du pare-brise, grâce à la partie centrale de la planche de bord qui est apte à s'escamoter et à la partie centrale de l'auvent qui est alors apte à servir de rampe d'accès.

De manière générale, il est ainsi possible de prévoir un déplacement de tout autre élément présent sur un chemin d'accès privilégié à l'issue de secours afin de faciliter toute évacuation des membres d'équipage présents dans le cockpit.

L'invention propose aussi, selon un autre aspect, un procédé d'ouverture d'une issue de secours ménagée au centre d'un pare-brise dans un cockpit, comprenant au moins une étape de commande d'ouverture d'une glace centrale du pare-brise du cockpit dans laquelle la glace centrale du pare-brise se déplace, c'est-à-dire coulisse vers le bas, vers une position ouverte dégageant au moins partiellement une ouverture ayant des dimensions suffisantes pour constituer une issue de secours.

Selon un exemple particulier de mise en oeuvre de l'invention, le procédé comprend en outre une étape de déplacement d'une partie centrale d'une planche de bord.

Selon un autre exemple particulier de mise en oeuvre de l'invention, le procédé comprend en outre une étape de déplacement d'une partie centrale d'un auvent.

L'ouverture de la glace centrale est par exemple télécommandée afin de la faciliter malgré une non-proximité directe de la glace centrale vis-à-vis des pilotes. Pour cela, une telle télécommande peut être mécanique, par exemple grâce à un câble ou une poignée, ou alors électrique.

On entend en effet ici, par « télécommande » ou « télécommandé » que la commande est à distance, par exemple grâce à un jeu de bras de levier ou un circuit hydraulique pour une commande mécanique, ou un système électrique, avec ou sans fils, par exemple via une commande à câble ou une gâche électrique.

Enfin, est proposé un aéronef comprenant un cockpit tel que défini précédemment.

L'invention, selon un exemple de réalisation, sera bien comprise et ses avantages apparaitront mieux à la lecture de la description détaillée qui suit, donnée à titre illustratif et nullement limitatif, en référence aux dessins annexés dans lesquels :
Les figure 1a et 1b représentent respectivement une vue de profil et une vue en perspective de l'extérieur d'un cockpit d'aéronef avec un pare-brise comprenant une glace centrale dans une position fermée, selon un exemple de réalisation de l'invention ;
La figure 2 représente une vue en perspective de l'extérieur d'un cockpit d'aéronef avec la glace centrale dans une position intermédiaire, selon un exemple de réalisation de l'invention ;
La figure 3 représente une vue en perspective de l'extérieur d'un cockpit d'aéronef avec la glace centrale dans une position ouverte, selon un exemple de réalisation de l'invention ;
Les figures 4a et 4b représentent respectivement une vue en coupe de profil et une vue en perspective d'un cockpit selon un exemple de réalisation, où la glace centrale est dans une position fermée ;
Les figures 5a et 5b représentent respectivement une vue en coupe de profil et une vue en perspective du cockpit selon un exemple de réalisation, où la glace centrale est dans une position ouverte et un chemin d'accès libéré ;
La figure 6 représente un exemple de réalisation selon la présente invention d'un mécanisme de mouvement d'une partie centrale d'un auvent et d'une partie centrale d'une planche de bord ;
Les figures 7a à 7d illustrent en perspective des séquences d'effacement de la partie centrale de la planche de bord et de la partie centrale de l'auvent pour permettre l'accès à l'issue de secours ; et
Les figures 8a à 8h illustrent des séquences d'effacement de la partie centrale de la planche de bord et de la partie centrale de l'auvent pour permettre l'accès à l'issue de secours, ainsi qu'un escamotage de la glace centrale ; les figures 8c et 8d illustrant une même séquence vue respectivement de profile et en perspective.

Les éléments identiques représentés sur l'ensemble des figures sont identifiés par des références numériques identiques.

De manière générale dans ce document, les termes « haut » ou « supérieur », « bas » ou « ventral » ou « inférieur », « latéral », « avant », « arrière », permettent de désigner une position relative d'un élément ou un mouvement dans un référentiel rattaché à un aéronef selon un sens de marche traditionnel. Ainsi, par exemple, au sein du cockpit, le pare-brise est situé à l'avant des sièges.

Un pare-brise 10 d'un aéronef comprend généralement plusieurs glaces, disposées de façon symétriques par rapport à un plan central de l'aéronef.

Selon l'invention, un cockpit d'aéronef à double poste de pilotage comprend un pare-brise 10 comprenant une glace centrale 11, dans un chambranle 12 délimitant une ouverture 13 centrale.

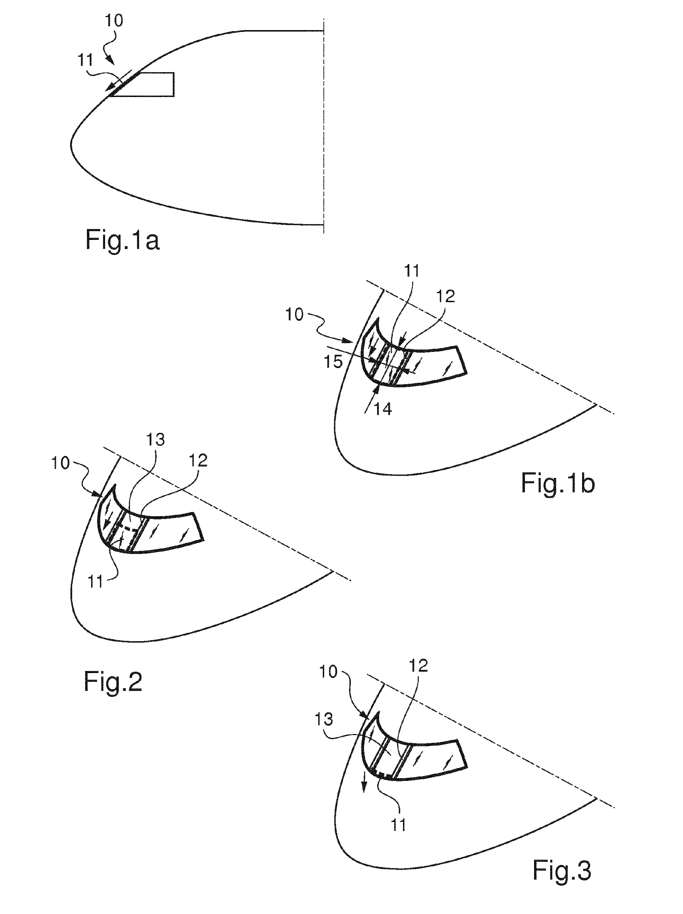

La glace centrale 11 présente une position fermée (par exemple figures 1a et 1b) dans laquelle la glace centrale 11 obture l'ouverture 13 délimitée par le chambranle 12, et à partir de laquelle elle est amovible pour dégager l'ouverture 13 délimitée par le chambranle 12, cette ouverture 13 ayant des dimensions suffisantes pour constituer une issue de secours.

Dans l'exemple illustré ici, l'ouverture 13 présente une hauteur 14 de 600 mm et une largeur 15 de 550 mm (millimètres), ce qui, de prime abord, est un ordre de grandeur répondant au besoin pour une évacuation facile.

La glace centrale 11 peut être complètement dégagée vers l'intérieur, voire vers l'extérieur, du cockpit. Toutefois, dans le présent exemple de réalisation, la glace centrale 11 du pare-brise 10 est escamotable, vers le bas, c'est-à-dire selon un mouvement vertical, à partir de la position fermée, et peut prendre une position ouverte, comme le montre la figure 3, dans laquelle la glace centrale est dans un lieu de stockage, ainsi qu'au moins une position intermédiaire, comme le montre la figure 2.

Ainsi, la glace centrale 11 du pare-brise 10 permet à la fois de faire office d'issue de secours pour une évacuation d'urgence, et de procurer une ventilation naturelle du cockpit confortable. Une seule position intermédiaire est ici illustrée mais la glace centrale 11 peut bien entendu en présenter plusieurs, permettant de choisir un degré de ventilation du cockpit.

En position ouverte, la glace centrale 11 dégage alors l'ouverture 13, au moins presque totalement, alors que dans une position intermédiaire, elle ne dégage l'ouverture 13 qu'en partie.

Comme il l'est visible sur les figures en perspective (par exemple les figures 1b, 2 et 3) le pare-brise 10 présente une courbure horizontale plus importante dans sa partie centrale. Un mouvement vertical, vers le bas, permet un dégagement facile de l'ouverture 13 en minimisant tout encombrement et sans gêner le champ de vue des pilotes.

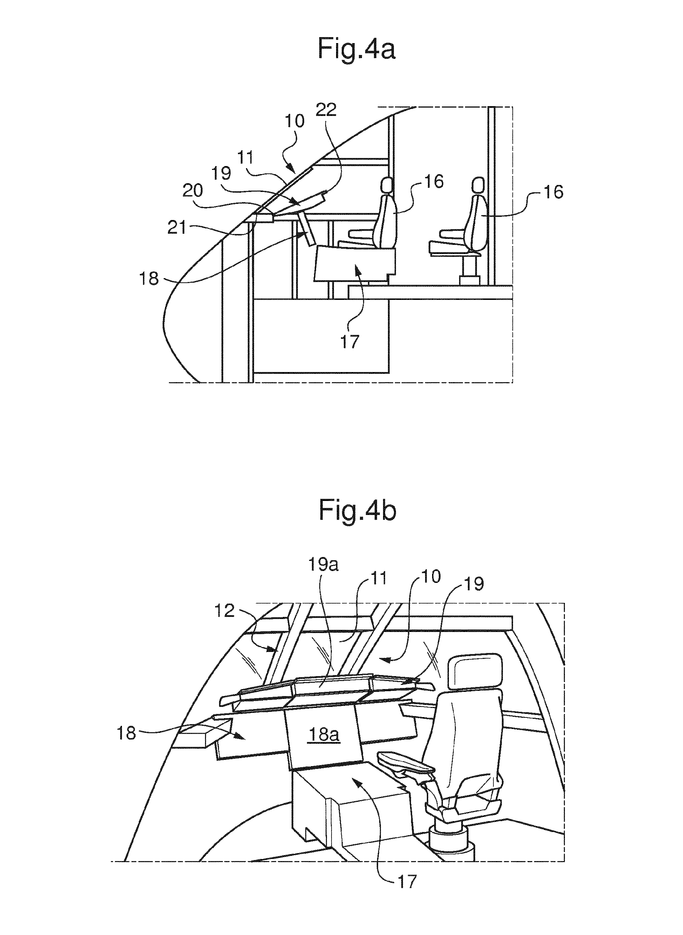

Les figures 4a et 4b illustrent un exemple de réalisation d'un cockpit dans lequel les éléments présents ont été optimisés afin de pouvoir présenter un encombrement le plus faible possible.

Dans le cockpit, de manière classique, se trouvent deux sièges de pilotage 16.

Les sièges 16 sont en l'occurrence disposés de part et d'autre d'un ilot central 17, également dénommé pylône. Le pylône 17 comprend par exemple au moins une partie des meubles avioniques.

Les sièges 16 font face à une planche de bord 18 au-dessus de laquelle se trouve un auvent 19. Chaque siège 16 accueille un pilote de manière à ce que les pilotes se trouvent assis dans le sens de déplacement de l'aéronef. Face à eux se trouve alors la planche de bord 18 qui regroupe, d'une part, des moyens de commande permettant le pilotage de l'aéronef et, d'autre part, des moyens de visualisation permettant d'informer les pilotes sur l'état de l'aéronef, et sur leur environnement. Les moyens de commande peuvent être des boutons poussoirs, des molettes, des boutons rotatifs ou bien aussi des moyens de saisie tels que des tablettes ou claviers. Les moyens de visualisation sont quant à eux le plus souvent des voyants et des écrans, et de préférence des écrans plats, voire tactiles, afin de réduire au mieux l'encombrement dans le cockpit.

Comme le montrent les figures 4a et 4b, l'auvent 19 est incliné vers le haut de sorte qu'une extrémité avant 20 de l'auvent 19 soit située à une hauteur inférieure ou égale d'un bord inférieur 21 du pare-brise 10, ou de préférence, dans une continuité ou un prolongement, ou du moins un voisinage proche, du bord inférieur 21 du pare-brise 10. Une extrémité arrière 22 de l'auvent 19 est plus haute que son extrémité avant 20, ce qui permet une protection efficace contre des reflets qui occulteraient des informations fournies par la planche de bord 18.

Un tel aménagement du cockpit permet de dégager du volume dans le cockpit, notamment vers l'avant du cockpit, laissant envisager un déplacement d'une glace centrale 11 de pare-brise 10 tel que décrit précédemment, en modifiant au minimum cet aménagement.

Selon un autre aspect de la présente invention, afin de faciliter l'accès à l'ouverture 13, l'auvent 19 présente une partie centrale 19a mobile. On entend ici par « central » que la partie mobile 19a de l'auvent 19 se situe de préférence dans un prolongement de l'ouverture 13 (que celle-ci soit occultée ou non par la glace centrale 11). Elle est en outre de préférence située à égale distance de chaque poste de pilotage afin de ne pas gêner davantage un pilote par rapport à l'autre.

Tout type de mobilité peut être conféré à la partie centrale 19a de l'auvent 19. Par exemple, elle pourrait être apte à être retirée par un pilote.

Selon encore un autre aspect de l'invention, cette facilité d'accès à l'issue de secours est encore améliorée du fait que la planche de bord 18 présente aussi une partie centrale 18a mobile. De même, on entend ici par « central » que la partie mobile 18a de la planche de bord 18 se situe de préférence dans un prolongement de la partie centrale 19a de l'auvent 19, et est en outre de préférence située à égale distance de chaque poste de pilotage afin de ne pas gêner davantage un pilote par rapport à l'autre. De même, tout type de mobilité peut être conféré à la partie centrale 18a de la planche de bord 18. Par exemple, elle pourrait être apte à être retirée par un pilote.

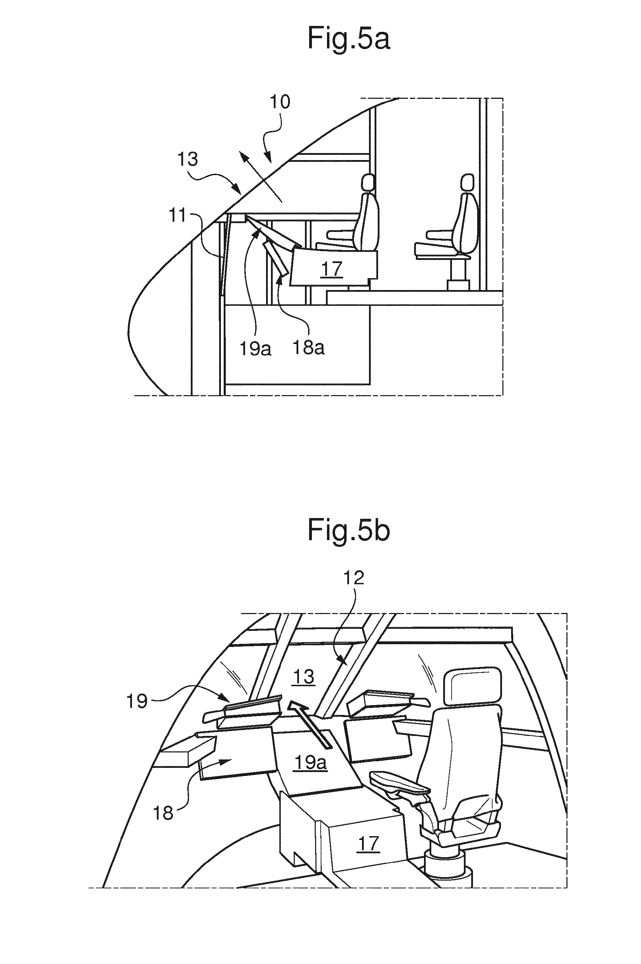

Les figures 5a et 5b illustrent ainsi un exemple de réalisation de la glace centrale 11 en position ouverte, et une voie d'accès libérée grâce aux parties centrales 18a et 19a mobiles, respectivement de la planche de bord 18 et de l'auvent 19. Selon un exemple avantageux de réalisation, la glace centrale 11, la partie centrale 19a de l'auvent 19, la partie centrale 18a de la planche de bord 18, et le pylône 17 présentent sensiblement des largeurs semblables voire identiques.

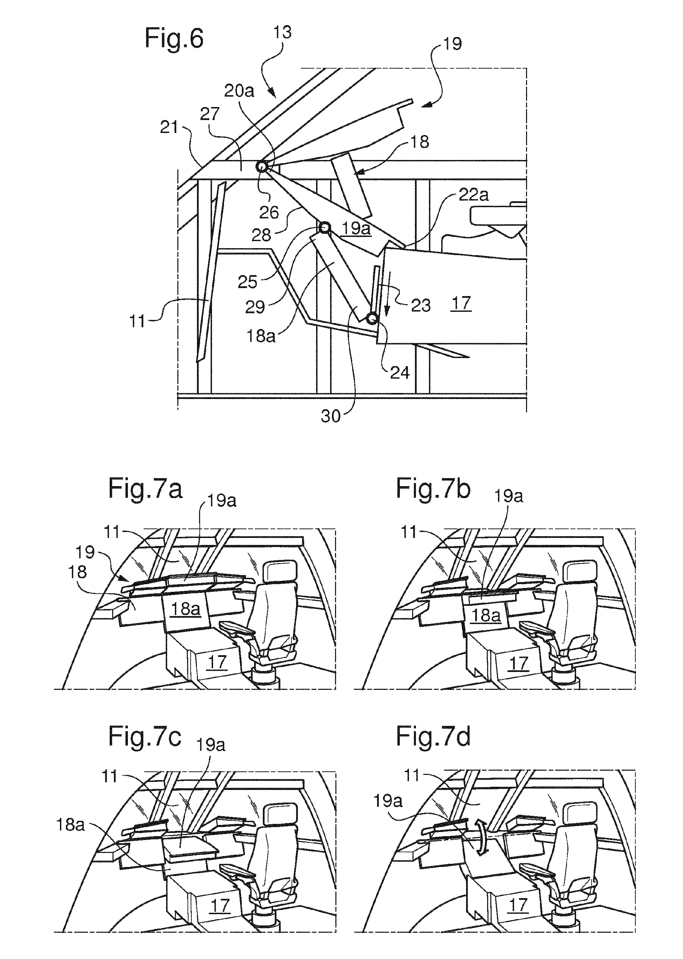

La figure 6 présente un exemple de cinématique conférant aux parties centrales 18a et 19a de la planche de bord 18 et de l'auvent 19 une mobilité permettant de libérer davantage un accès à l'issue de secours formée par l'ouverture 13 lorsque la glace centrale 11 est en position ouverte.

Ainsi, d'une part, la glace centrale 11 est mobile. En coulissant sur des rails, elle peut, au choix, prendre une position ouverte (comme c'est le cas sur la figure 6) ou une position intermédiaire pour une aération du cockpit. Par exemple, la glace centrale 11 est montée coulissante sur au moins un rail de guidage dont la géométrie permet d'extraire la glace centrale 11 de son chambranle 12 et d'amener celle-ci à son lieu de stockage, la glace centrale 11 étant guidée et déplacée dans au moins ce rail via des galets. Le cockpit peut en outre comporter un élément élastique conçu pour augmenter un effort nécessaire au mouvement de la glace centrale 11 au fur et à mesure qu'elle est escamotée, ainsi qu'un dispositif de freinage dynamique de la glace centrale 11, comme par exemple des vérins hydrauliques de freinage dynamique.

D'autre part, et indépendamment du mouvement de la glace centrale 11, les parties centrales 18a et 19a de la planche de bord 18 et de l'auvent 19 sont mobiles pour dégager une voie d'accès à l'issue de secours et faciliter une évacuation.

Dans le présent exemple schématique de la figure 6, la partie centrale 19a de l'auvent 19 est basculante. Pour cela, elle est ici reliée d'un côté à la partie centrale 18a de la planche de bord 18 par une première liaison pivot 25 joignant une extrémité avant 29 de la partie centrale 18a de la planche de bord 18 à une face inférieure 28 de la partie centrale 19a de l'auvent 19. D'un autre côté, la partie centrale 19a de l'auvent 19 est reliée au chambranle 12 via un élément de structure 27 par une deuxième liaison pivot 26 au niveau de son extrémité avant 20a, portion du bord avant 20 de l'auvent 19 correspondant à la partie centrale 19a. L'élément de structure 27 fait ainsi un lien entre l'extrémité avant 20a de la partie centrale 19a de l'auvent 19 et le bord inférieur 21 du pare-brise 10, de sorte que l'extrémité avant 20a de la partie centrale 19a de l'auvent 19 soit située dans un prolongement du bord inférieur 21, par exemple dans un même plan horizontal, voire dans un même plan horizontal qu'une partie inférieure du chambranle 12.

De plus, dans cet exemple de réalisation, la partie centrale 18a, mobile, de la planche de bord 18 est d'un côté reliée à la partie centrale 19a de l'auvent 19 par la première liaison pivot 25 située au niveau de son extrémité avant 29, et d'un autre côté, la partie centrale 18a de la planche de bord 18 est reliée au pylône 17 par une liaison de type pivot-glissant 23, 24 situé à son extrémité arrière 30, c'est-à-dire une combinaison d'une liaison glissière et d'une liaison pivot. Le pivot glissant 23, 24 est par exemple constitué d'un rail de translation 23, permettant un pivotement selon un axe orthogonal au rail 23, et d'une butée 24 à un bout inférieur du rail 23. Le pivot glissant 23, 24 peut par exemple comprendre un rail 23 unique positionné de manière centrale par rapport à la partie centrale 18a de la planche de bord 18, ou bien deux rails 23 de sorte que chacun des rails 23 soit disposé selon une extrémité latérale de la partie centrale 18a de la planche de bord 18.

Ainsi, la partie centrale 18a de la planche de bord 18 effectue majoritairement un mouvement de translation verticale vers le bas tandis que la partie centrale 19a de l'auvent 19 effectue un mouvement de rotation autour de la deuxième liaison pivot 26, entrainée par la partie centrale 18a de la planche de bord 18.

Leur mouvement est arrêté et leur position est stable lorsque la voie d'accès à l'issue de secours est libérée grâce au fait que la partie centrale 19a de l'auvent 19 vient en butée sur le pylône 17 par son extrémité arrière 22a (portion du bord arrière 22 de l'auvent 19 correspondant à la partie centrale 19a), et que l'extrémité arrière 30 de la partie centrale 18a de la planche de bord 18 est arrêtée par la butée 24 du pivot glissant 23, 24.

En outre, l'extrémité 22a est ici formée d'un rebord permettant de limiter tout décrochement de surface lorsque la partie centrale 19a de l'auvent 19 est en butée sur le pylône 17.

Ainsi, la partie centrale 19a de l'auvent 19 en position basculée forme une rampe d'accès à l'ouverture 13 délimitée par le chambranle 12 lorsque la glace centrale 11 est dans une position ouverte, et la partie centrale 18a de la planche de bord 18 est alors escamotée, ou rétractée.

Un tel agencement du cockpit permet ainsi de former un chemin d'accès direct à l'issue de secours formée par la glace centrale 11 du pare-brise 10, grâce à la partie centrale 18a de la planche de bord 18 qui est apte à s'escamoter et à la partie centrale 19a de l'auvent 19 qui est alors apte à servir de rampe d'accès.

La masse de l'ensemble mobile (les parties centrales 18a et 19a) peut en outre être freiné de la même manière que celle utilisée pour la glace centrale 11. Par contre, il est très optionnel de compenser cette masse, dans la mesure où un changement de position de ces parties mobiles (18a et 19a) n'est normalement exercé qu'une seule fois, en cas d'urgence.

Dans une position standard, l'extrémité avant 20a de la partie centrale 19a de l'auvent 19 est moins haute que son extrémité arrière 22a, alors qu'en position basculée, l'extrémité avant 20a de la partie centrale 19a de l'auvent 19 est au moins aussi haute que son extrémité arrière 22a, et de préférence plus haute.

En ce qui concerne la partie centrale 18a de la planche de bord 18, en position standard comme en position escamotée (ou rétractée), son extrémité avant 29 est plus haute que son extrémité arrière 30.

Les figures 7a à 7d illustrent ces mouvements de parties centrales 18a et 19a, alors que la glace centrale 11 est ici immobile en position fermée. Ainsi, sur la figure 7a, les parties centrales 18a et 19a sont en position standard ; sur les figures 7b et 7c, les parties centrales 18a et 19a sont en deux position différentes en cours de mouvement ; puis en figure 7d, la partie centrale 18a de la planche de bord 18 est complément cachée tandis que la partie centrale 19a forme une rampe d'accès à l'issue de secours.

De manière générale, il est ainsi possible de prévoir un déplacement de tout autre élément présent sur un chemin d'accès privilégié à l'issue de secours afin de faciliter toute évacuation des membres d'équipage présents dans le cockpit.

Selon le présent exemple de réalisation, un procédé d'ouverture d'une issue de secours ménagée au centre d'un pare-brise 10 dans un cockpit, comprend alors par exemple au moins les étapes suivantes :
- Une étape de commande d'ouverture d'une glace centrale 11 d'un pare-brise 10 du cockpit, dans laquelle la glace centrale 11 du pare-brise 10 se déplace vers une position ouverte dégageant au moins partiellement une ouverture 13 ayant des dimensions suffisantes pour constituer une issue de secours, ce qui consiste ici en un coulissement vers le bas ;
- Une étape de déplacement d'une partie centrale 18a d'une planche de bord 18, consistant ici en un déverrouillage en translation vers le bas de la partie centrale 18a de la planche de bord 18 ;
- Une étape de déplacement d'une partie centrale 19a d'un auvent 19, consistant ici en un basculement vers le bas de la partie centrale 19a de l'auvent 19.

En l'occurrence, la translation de la partie centrale 18a de la planche de bord 18 et le basculement de la partie centrale 19a de l'auvent 19 ont alors lieu simultanément puisque la partie centrale 19a de l'auvent 19 est reliée, voire entrainée, par la partie centrale 18a de la planche de bord 18. Toutefois, selon d'autres modes de réalisation possible, leurs mouvements peuvent être simultanés ou dissociés, et les parties centrales 18a et 19a peuvent être reliées ou indépendantes.

Optionnellement, l'ouverture de la glace centrale 11 est télécommandée afin de la faciliter, malgré une non-proximité directe de la glace centrale 11 vis-à-vis des pilotes. Pour cela, une telle télécommande peut être mécanique, par exemple grâce à un câble ou une poignée, ou alors électrique.

On entend en effet ici, par « télécommande » ou « télécommandé » que la commande est à distance, par exemple grâce à un jeu de bras de levier ou un circuit hydraulique pour une commande mécanique, ou un système électrique, avec ou sans fils, par exemple via une commande à câble ou une gâche électrique.

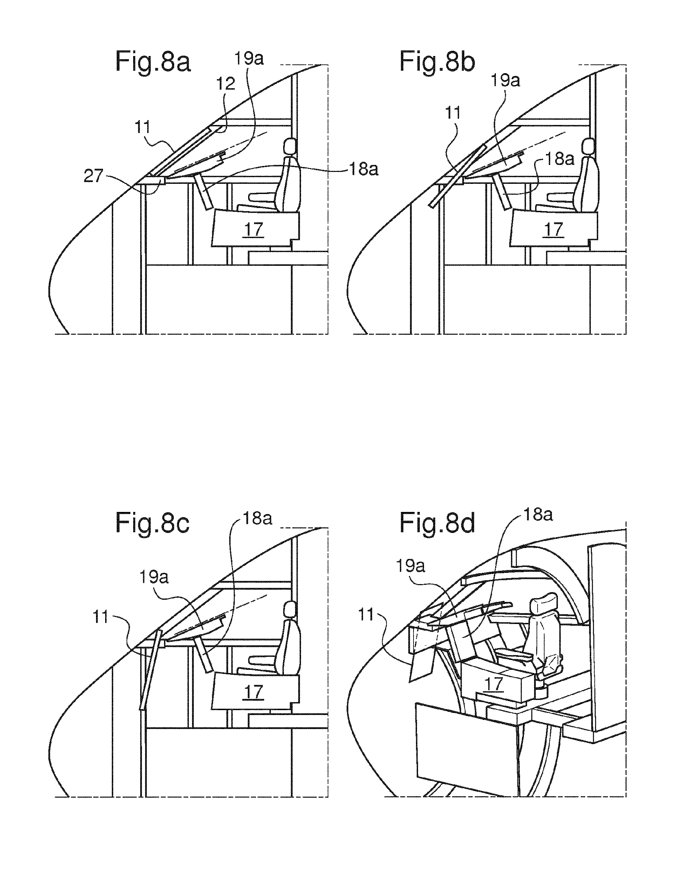

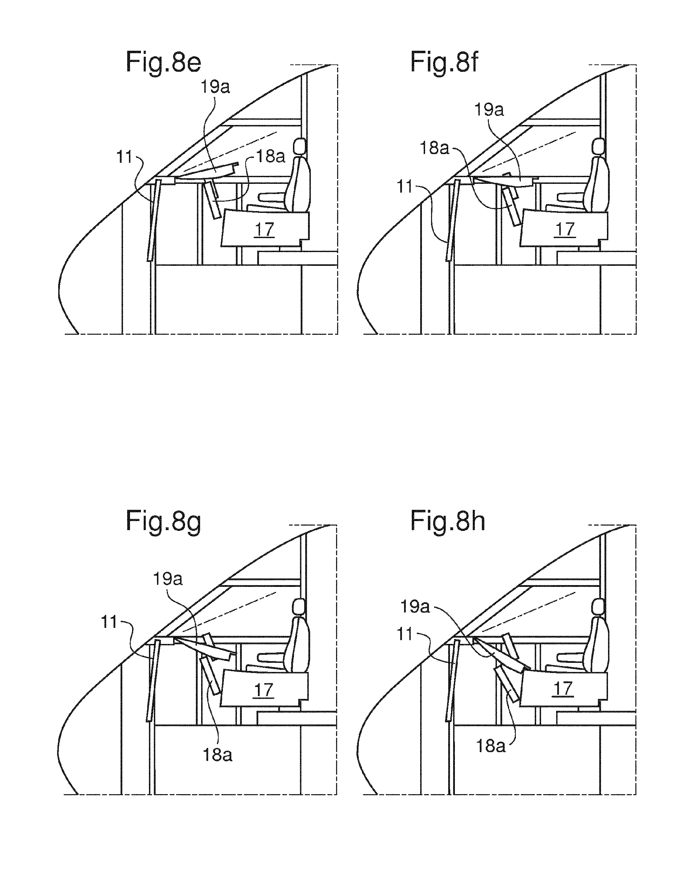

Les figures 8a à 8h illustrent ce procédé selon un exemple dans lequel la glace centrale 11 s'escamote dans un premier temps (figure 8a à 8d), puis une voie d'accès est libérée dans un second temps (figures 8e à 8h).

Plus précisément, en figure 8a, la glace centrale 11 est dans le chambranle 12 en position fermée. En figure 8b, la glace centrale 11 est dans une position intermédiaire. Il est alors possible de la remonter dans sa position fermée (retour à la position de la figure 8a) ou de l'ouvrir, c'est-à-dire l'escamoter complètement. En figure 8c, la glace centrale 11 est en position escamotée ; la figure 8d présente cette même configuration mais selon une vue en perspective. Dans cette position, la glace centrale 11 permet une grande aération du cockpit et/ou de faire office d'issue de secours.

Si la glace centrale 11 doit faire office d'issue de secours, il est alors plus commode que l'accès soit dégagé. Pour cela, comme le montrent les figure 8e à 8h, la partie centrale 18a de la planche de bord 18 descend, c'est-à-dire se translate verticalement vers le bas, pendant que la partie centrale 19a de l'auvent 19 bascule. Ainsi, en figure 8h, la rampe d'accès est formée par la partie centrale 19a de l'auvent 19. Cette configuration permet alors une évacuation plus facile et plus rapide du cockpit.

Une fois la voie libre, l'équipage peut s'extraire du cockpit en utilisant, comme cela est fait classiquement, une corde à noeuds, par exemple stockée à proximité directe de l'ouverture 13, ou par exemple, un dispositif à câbles, poignée et frein inertiel à usage unique.

Bien sûr, la présente invention ne se limite pas à la description précédente, mais s'étend à toute variante dans le cadre des revendications ci-après.

## Revendications

1. Cockpit d'aéronef à double poste de pilotage comprenant un pare-brise (10) comprenant, dans un chambranle (12) délimitant une ouverture (13) centrale, une glace centrale (11), ayant une position fermée dans laquelle la glace centrale (11) obture l'ouverture (13), et à partir de laquelle elle est amovible pour dégager au moins partiellement l'ouverture (13) délimitée par le chambranle (12), cette ouverture (13) ayant des dimensions suffisantes pour constituer une issue de secours, **caractérisé en ce que** la glace centrale (11) du pare-brise (10) est escamotable, vers le bas, entre la position fermée et une position ouverte, dans laquelle la glace centrale (11) est dans un lieu de stockage.

2. Cockpit selon la revendication 1, **caractérisé en ce que** la glace centrale (11) présente en outre au moins une position intermédiaire entre la position fermée et la position ouverte dans laquelle elle permet une aération du cockpit.

3. Cockpit selon l'une quelconque des revendications 1 ou 2, **caractérisé en ce que** la glace centrale (11) est montée coulissante sur au moins un rail de guidage (23) dont la géométrie permet d'extraire la glace centrale (11) de son chambranle (12) et d'amener celle-ci à son lieu de stockage, la glace centrale (11) étant guidée et déplacée dans au moins ce rail (23) via des galets.

4. Cockpit selon l'une quelconque des revendications 1 à 3, **caractérisé en ce qu'**il comporte un élément élastique conçu pour augmenter un effort nécessaire au mouvement de la glace centrale (11) au fur et à mesure qu'elle est déplacée.

5. Cockpit selon l'une quelconque des revendications 3 ou 4, **caractérisé en ce qu'**il comprend un dispositif de freinage dynamique de la glace centrale (11).

6. Cockpit selon l'une quelconque des revendications 1 à 5, **caractérisé en ce qu'**il comprend un auvent (19) ayant une partie centrale (19a) mobile.

7. Cockpit selon l'une quelconque des revendications 1 à 6, **caractérisé en ce qu'**il comprend une planche de bord (18) ayant une partie centrale (18a) mobile.

8. Cockpit selon les revendications 6 et 7, **caractérisé en ce que** la partie centrale (19a) de l'auvent (19) est reliée d'une part à la partie centrale (18a) de la planche de bord (18) par une première liaison pivot (25), et d'autre part au chambranle (12) par une deuxième liaison pivot (26), et **en ce que** la partie centrale (18a) de la planche de bord (18) est reliée d'une part à la partie centrale (19a) de l'auvent (19) par la première liaison pivot (25), et d'autre part à un pylône (17) par un pivot-glissant (23, 24).

9. Procédé d'ouverture d'une issue de secours ménagée au centre d'un pare-brise (10) dans un cockpit, comprenant au moins une étape de commande d'ouverture d'une glace centrale (11) du pare-brise (10) du cockpit dans laquelle la glace centrale (11) du pare-brise (10) coulisse vers le bas vers une position ouverte dégageant au moins partiellement une ouverture (13) ayant des dimensions suffisantes pour constituer une issue de secours.

10. Procédé selon la revendication 9, **caractérisé en ce qu'**il comprend en outre une étape de déplacement d'une partie centrale (18a) d'une planche de bord (18).

11. Procédé selon l'une quelconque des revendications 9 ou 10, **caractérisé en ce qu'**il comprend en outre une étape de déplacement d'une partie centrale (19a) d'un auvent (19).

12. Aéronef comprenant un cockpit selon l'une quelconque des revendications 1 à 8.

## Patentansprüche

1. Doppel-Luftfahrzeugcockpit, das eine Windschutzscheibe (10) umfasst, die in einer Fensterstockverkleidung (12), die eine zentrale Öffnung (13) abgrenzt, eine zentrale Glasscheibe (11) umfasst, die eine geschlossene Position hat, in der die zentrale Glasscheibe (11) die Öffnung (13) verschließt, und ausgehend von welcher sie abnehmbar ist, um die Öffnung (13), die von der Fensterstockverkleidung (12) abgegrenzt ist, mindestens teilweise freizulegen, wobei diese Öffnung (13) Maße hat, die ausreichen, um einen Notausgang zu bilden, **dadurch gekennzeichnet, dass** die zentrale Glasscheibe (11) der Windschutzscheibe (10) nach unten zwischen der geschlossenen Position und einer offenen Position, in der die zentrale Glasscheibe (11) in einem Lagerort ist, einziehbar ist.

2. Cockpit nach Anspruch 1, **dadurch gekennzeichnet, dass** die zentrale Glasscheibe (11) ferner mindestens eine Zwischenposition zwischen der geschlossenen Position und der offenen Position aufweist, in der sie eine Belüftung des Cockpits erlaubt.

3. Cockpit nach einem der Ansprüche 1 oder 2, **dadurch gekennzeichnet, dass** die zentrale Glasscheibe (11) auf mindestens einer Führungsschiene (23), deren Geometrie das Herausziehen der zentralen Glasscheibe (11) aus ihrer Fensterstockverkleidung (12) und ihren Transport an ihre Lagerstelle erlaubt, gleitend montiert ist, wobei die zentrale Glasscheibe (11) in mindestens dieser Schiene (23) anhand von Walzen geführt und bewegt wird.

4. Cockpit nach einem der Ansprüche 1 bis 3, **dadurch gekennzeichnet, dass** es ein elastisches Element umfasst, das konzipiert ist, um eine Kraft zu erhöhen, die für die Bewegung der zentralen Glasscheibe (11) im Laufe ihrer Bewegung erforderlich ist.

5. Cockpit nach einem der Ansprüche 3 oder 4, **dadurch gekennzeichnet, dass** es eine Vorrichtung zum dynamischen Bremsen der zentralen Glasscheibe (11) umfasst.

6. Cockpit nach einem der Ansprüche 1 bis 5, **dadurch gekennzeichnet, dass** es mindestens ein Windlaufquerteil (19) hat, das einen beweglichen zentralen Teil (19a) hat.

7. Cockpit nach einem der Ansprüche 1 bis 6, **dadurch gekennzeichnet, dass** es ein Armaturenbrett (18) umfasst, das einen beweglichen zentralen Teil (18a) hat.

8. Cockpit nach den Ansprüchen 6 und 7, **dadurch gekennzeichnet, dass** der zentrale Teil (19a) des Windlaufquerteils (19) einerseits mit dem zentralen Teil (18a) des Armaturenbretts (18) durch eine erste Schwenkverbindung (25), und andererseits mit der Fensterstockverkleidung (12) durch eine zweite Schwenkverbindung (26) verbunden ist, und das der zentrale Teil (18a) des Armaturenbretts (18) einerseits mit dem zentralen Teil (19a) des Windlaufquerteils (19) durch die erste Schwenkverbindung (25) und andererseits mit einer Stütze (17) durch eine Gleitschwenkung (23, 24) verbunden ist.

9. Verfahren zum Öffnen eines Notausgangs, der in der Mitte einer Windschutzscheibe (10) in einem Cockpit eingerichtet ist, das mindestens einen Schritt des Steuerns des Öffnens einer zentralen Glasscheibe (11) der Windschutzscheibe (10) des Cockpits umfasst, bei dem die zentrale Glasscheibe (11) der Windschutzscheibe (10) nach unten zu einer offenen Position gleitet, die eine Öffnung (13), die ausreichende Maße hat, um einen Notausgang zu bilden, mindestens teilweise freilegt.

10. Verfahren nach Anspruch 9, **dadurch gekennzeichnet, dass** es außerdem einen Schritt des Bewegens eines zentralen Teils (18a) eines Armaturenbretts (18) umfasst.

11. Verfahren nach einem der Ansprüche 9 oder 10, **dadurch gekennzeichnet, dass** es außerdem einen Schritt des Bewegens eines zentralen Teils (19a) einer Windlaufquerleiste (19) umfasst.

12. Luftfahrzeug, das ein Cockpit nach einem der Ansprüche 1 bis 8 umfasst.

## Claims

1. Aircraft cockpit with a double flight deck, comprising a windscreen (10) comprising, in a windscreen frame (12) delimiting a central opening (13), a central pane (11), having a closed position in which the central pane (11) fills the opening (13), and from which it can be removed in order to at least partially clear the opening (13) delimited by the windscreen frame (12), this opening (13) having sufficiently large dimensions to constitute an emergency exit, **characterized in that** the central pane (11) of the windscreen (10) is retractable downwards between the closed position and an open position in which the central pane (11) is in a storage location.

2. Cockpit according to claim 1, **characterized in that** the central pane (11) has moreover at least one intermediate position, between the closed position and the open position, in which it allows ventilation of the cockpit.

3. Cockpit according to any one of claims 1 or 2, **characterized in that** the central pane (11) is mounted capable of sliding on at least one guide track (23) the geometry of which makes it possible to extract the central pane (11) from its windscreen frame (12) and to guide it to its storage location, the central pane (11) being guided and displaced in at least this track (23) via rollers.

4. Cockpit according to any one of claims 1 to 3, **characterized in that** it comprises a flexible element designed to increase a force that is needed for moving the central pane (11) as and when it is displaced.

5. Cockpit according to any one of claims 3 or 4, **characterized in that** it comprises a dynamic braking device of the central pane (11).

6. Cockpit according to any one of claims 1 to 5, **characterized in that** it comprises a glare shield (19) having a moveable central portion (19a).

7. Cockpit according to any one of claims 1 to 6, **characterized in that** it comprises a flight station instrument panel (18) having a moveable central portion (18a).

8. Cockpit according to claims 6 and 7, **characterized in that** the central portion (19a) of the glare shield (19) is linked on the one hand to the central portion (18a) of the flight station instrument panel (18) by a first hinged joint (25), and on the other hand to the windscreen frame (12) by a second hinged joint (26), and **in that** the central portion (18a) of the flight station instrument panel (18) is linked on the one hand to the central portion (19a) of the glare shield (19) by the first hinged joint (25), and on the other hand to a pylon (17) by a slide hinge (23, 24).

9. Method for opening an emergency exit arranged at the centre of a windscreen (10) in a cockpit, comprising at least one step of controlling the opening of a central pane (11) of the windscreen (10) of the cockpit in which the central pane (11) of the windscreen (10) slides downwards to an open position, at least partially clearing an opening (13) having sufficiently large dimensions to constitute an emergency exit.

10. Method according to claim 9, **characterized in that** it comprises moreover a step of displacing a central portion (18a) of a flight station instrument panel (18).

11. Method according to any one of claims 9 or 10, **characterized in that** it comprises moreover a step of displacing a central portion (19a) of a glare shield (19) .

12. Aircraft comprising a cockpit according to any one of claims 1 to 8.
